# EUROPÄISCHE PATENTANMELDUNG

(11) **EP 1 396 654 A2**
(43) Veröffentlichungstag der Anmeldung: **10.03.2004**
(21) Anmeldenummer: 03015945.3
(22) Anmeldetag: 12.07.2003
(51) Int. Cl.: F16D 65/12

(54) **Bremsscheibe für eine Scheibenbremse**

(30) Priorität: 09.09.2002 DE 10241655
(71) Anmelder: BPW Bergische Achsen KG, 51674 Wiehl (DE)
(72) Erfinder: Siebel, Reiner, 53804 Much (DE)
(74) Vertreter: Christophersen & Partner

(57) **Zusammenfassung**

Die Erfindung betrifft eine Bremsscheibe für eine Scheibenbremse eines Kraftfahrzeuges, insbesondere eines Nutzfahrzeuges, mit zwei einander gegenüberliegenden Reibscheiben (1 ), zwischen denen ein insgesamt ringförmiger Kühlluftkanal (3) ausgebildet ist, der von d e beiden Reibscheiben (1) verbindenden Elementen (2) unterbrochen ist. Die Verbindungselemente (2) erzeugen eine turbulente Durchströmung des Kühlluftkanales (3). Zur verbesserten Wärmeabführung weist der Kühlluftkanal (3) darüber hinaus einen sich erweiternden Querschnitt auf, durch den durch Reflexion Strahlungswärme abgeführt wird.

## Beschreibung

Die Erfindung betrifft eine Bremsscheibe für eine Scheibenbremse eines Kraftfahrzeuges, insbesondere eines Nutzfahrzeuges, mit zwei einander in axialem Abstand gegenüberliegenden Reibscheiben, die unter Bildung eines insgesamt ringförmigen Kühlluftkanals durch Verbindungselemente miteinander verbunden sind.

Bremsscheiben der voranstehend beschriebenen Art sind beispielsweise aus der DE 35 39 640 C1 bekannt. Bei dieser bekannten Konstruktion sind die die beiden Reibscheiben verbindenden Elemente der Bremsscheibe als radial verlaufende Stege ausgebildet, zwischen denen sich einzelne Kühlluftkanäle ergeben. Die gegeneinander weisenden Innenseiten der Reibscheiben weisen eine Verdickung in Form einer Wölbung auf. Der Krümmungsradius dieser Wölbung ist derart bemessen, daß die Querschnittsfläche eines jeden durch die radialen Stege gebildeten Kühlluftkanals im Mittelbereich seiner Radialerstreckung, das heißt bei maximaler Verdickung wenigstens so groß ist wie die Querschnittsfläche in seinem Fußbereich. Die Zunahme jedes Kühlluftkanals in tangentialer Richtung gleicht somit die axiale Einengung durch die Wölbung aus, so daß sich keine Verengung des einzelnen Kühlluftkanales durch die Wölbung der Innenseiten der Reibscheiben ergibt.

Aus der US 6,119,820 ist es weiterhin bekannt, den insgesamt ringförmigen, durch Stege in einzelne Kanäle aufgeteilten Kühlluftkanal durch Wölbung der Innenseiten der beiden Reibscheiben in der Art einer Venturidüse auszubilden.

Durch diese düsenartige Ausbildung ergibt sich eine laminare, beschleunigte Strömung der Kühlluft. Hierdurch sollte eine verbesserte Wärmeabfuhr aus der hochbelasteten Bremsscheibe erzielt werden.

Ausgehend von dem bekannten, voranstehend beschriebenen Stand der Technik liegt der Erfindung die **Aufgabe** zugrunde, die Wärmeabfuhr aus einer innenbelüfteten Scheibenbremse weiter zu verbessern und insbesondere die sich im Bereich der größten axialen Dicke der beiden Reibscheiben stauende Wärme gezielt abzuführen.

Die Aufgabe ist erfindungsgemäß dadurch **gelöst**, daß die Verbindungselemente als im Abstand voneinander angeordnete Noppen ausgebildet sind, welche eine turbulente Durchströmung des Kühlluftkanals erzeugen, daß die Noppen auf konzentrischen Kreisen angeordnet sind, wobei die Noppen auf jeweils zwei einander benachbarten konzentrischen Kreisen radial versetzt zueinander angeordnet sind, und daß der Kühlluftkanal einen sich in zentrifugaler und/oder in zentripetaler Richtung erweiternden Querschnitt aufweist.

Der Kühlluftkanal wird folglich gebildet durch den zwischen den beiden Reibscheiben der Bremsscheibe vorhandenen freien, ringförmigen Raum, in welchem sich als Verbindungselemente die Noppen finden, die die beiden Reibscheiben miteinander verbinden. Die Luftströmung wird hierbei in dem gesamten ringförmigen Kühlluftkanal auf direktem Weg um die einzelnen Noppen herum nach außen abgeführt, ohne daß sich in dem Sinne, wie es beim Stand der Technik vorgezeichnet ist, definierte Luftkanäle in radialer Richtung mit laminarer Strömung einstellen können. Vielmehr wird eine turbulente unregelmäßige Durchströmung des Kühlluftkanals in seiner Gesamtheit erzeugt.

Die Ausbildung der turbulenten Strömung mit einer durch Verwirbelungen bedingten, verlängerten Verweilzeit der Kühlluft im Strömungskanal ist in der Lage, eine größere Wärmemenge aufzunehmen und abzuführen. Die Übertragung der Wärmeenergie vom festen Material der Bremsscheibe an das gasförmige Kühlmittel durch Konvektion ist hierbei um so größer, je turbulenter die Strömung ist.

Diese turbulente Strömung der Kühlluft, die letztlich durch die versetzte Noppenanordnung erzeugt wird, wird von einer zusätzlichen Abführung der entstehenden Wärme durch Strahlung überlagert. Durch die versetzte Noppenanordnung wird nicht nur eine turbulente Strömung der Kühlluft erzeugt, es entstehen auch bogenförmige Strahlungskanäle, in denen aufgrund der Tatsache, daß der Kühlluftkanal einen sich in zentrifugaler und/oder zentripetaler Richtung erweiternden Querschnitt aufweist, die von den heißen Reibscheiben abgestrahlte Wärme nach mehrfacher Reflexion an den Oberflächen der einander gegenüberliegenden Reibscheiben aus der Bremsscheibe abgeführt wird. Durch die Form der einander gegenüberliegenden Oberflächen der Reibscheiben kann dafür gesorgt werden, daß eine gezielte Abstrahlung stattfindet. Insbesondere aus den Teilen der Reibscheiben mit größerer axialer Dicke läßt sich auf diese Weise Wärmeenergie durch Wärmestrahlung abführen. Dieser auf einer Abführung der Wärmeenergie durch Strahlung beruhende Vorgang überlagert die konvektive Wärmeabfuhr durch die turbulente Strömung der Kühlluft, so daß insgesamt ein kombinativer Effekt aus Strahlung und Konvektion zur Verbesserung der Wärmeabfuhr durch die Erfindung erzielt wird.

Wenn die Noppen auf den konzentrischen Kreisen gemäß einem weiteren Merkmal mit unterschiedlicher Form und/oder Größe ausgebildet werden, läßt sich der Kanalquerschnitt und -verlauf vielfältig gestalten.

Um eine möglichst große Turbulenz im Kühlluftkanal zu erzeugen, kann erfindungsgemäß zumindest ein Teil der Noppen jeweils mit einer etwa tangential liegenden, nahezu ebenen Anströmfläche ausgebildet sein. Diese Anströmflächen dienen jeweils gezielt der Erzeugung von Turbulenz.

Wenn gemäß einem weiteren Merkmal der Erfindung die Noppen des inneren Kreises in radialer Richtung länglich, mit radialen Leitflächen ausgebildet werden, ergibt sich eine gezielte und verbesserte Einströmung der Kühlluft in den Kühlluftkanal.

Auf der Zeichnung sind ein Ausführungsbeispiel der Erfindung und drei Ausgestaltungsmöglichkeiten der einzelnen Kühlluftkanäle dargestellt, und zwar zeigen:
- Fig. 1: einen Axialschnitt durch eine Bremsscheibe entsprechend der Schnittlinie I-I in Fig. 2,
- Fig. 2: einen Querschnitt durch den insgesamt ringförmigen Kühlluftkanal gemäß der Schnittlinie II-II in Fig. 1,
- Fig. 3: einen Schnitt durch ein erstes Ausführungsbeispiel des Kühlluftkanals entsprechend der Schnittlinie III-III in Fig. 2, die gleichzeitig einen Strahlungskanal zeigt,
- Fig. 4: einen der Fig. 3 entsprechenden Schnitt einer weiteren Ausführungsform und
- Fig. 5: einen weiteren Schnitt einer geänderten Ausführungsform des Kühlluftkanals.

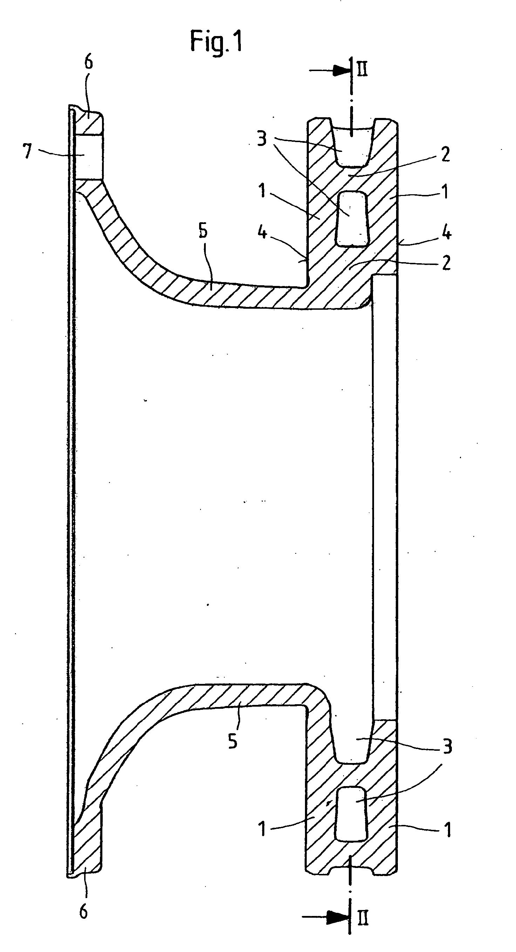

Wie aus der schematischen Darstellung in Fig. 1 hervorgeht, besteht die Bremsscheibe für die Scheibenbremse eines Nutzfahrzeuges aus zwei Reibscheiben 1, die durch Verbindungselemente 2 unter Bildung eines ringförmigen Kühlluftkanales 3 miteinander einstückig verbunden sind. Die Außenseite 4 der Reibscheiben 1 bildet ringförmige Reibflächen für die Bremsbeläge der nicht gezeichneten Scheibenbremse.

An ihrem inneren Ende sind die Reibscheiben 1 mittels eines im wesentlichen zylindrischen Überganges 5 mit einem Befestigungsflansch 6 verbunden, der Bohrungen 7 für Befestigungsschrauben enthält. Auch der Befestigungsflansch 6 und der Übergang 5 sind einstückig mit den Reibscheiben 1 ausgeführt.

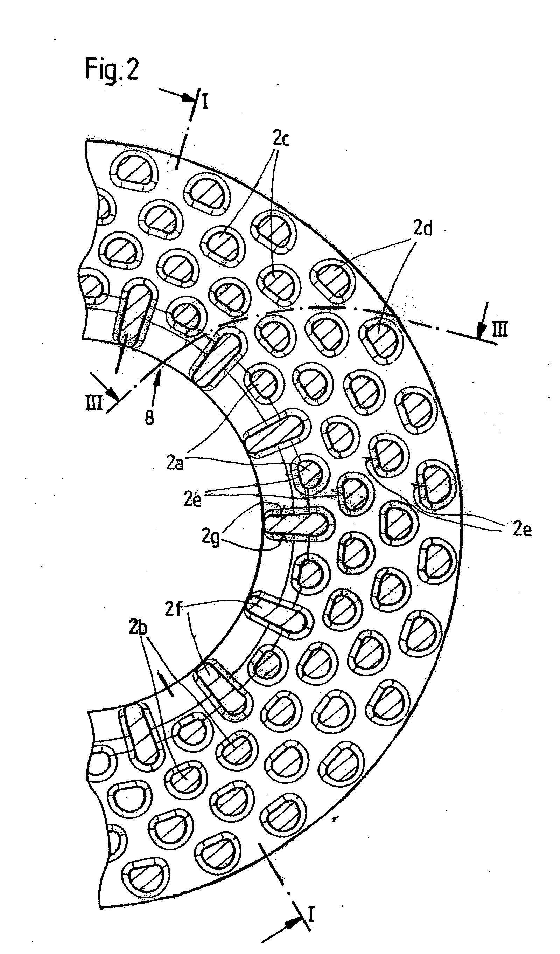

Wie der Schnitt der Fig. 2 erkennen läßt, sind bei der in den Fign. 1 und 2 dargestellten Ausführungsform die Verbindungselemente 2 als Noppen 2 a bis 2 d ausgeführt, die auf konzentrischen Kreisen angeordnet sind. Die Noppen 2 a - 2 d sind auf den einander benachbarten konzentrischen Kreisen auf Lücke zueinander angeordnet, so daß bogenförmige Strahlungskanäle 8 entsprechend dem Verlauf der Schnittlinie III-III gebildet werden. Beim Ausführungsbeispiel nach Fig. 2 weisen die Noppen 2 a bis 2 d eine unterschiedliche Größe, jedoch gleiche Form auf. Sie besitzen eine etwa tangential liegende, nahezu ebene Anströmfläche 2 e, die beim Durchströmen der Kühlluft Wirbel erzeugt.

Zwischen den Noppen 2 a der radial am weitesten innen liegenden Reihe befinden sich längliche Noppen 2 f, die mit etwa radial verlaufenden Leitflächen 2 g versehen sind. Diese Noppen 2 f mit ihren Leitflächen 2 g sorgen für eine gute und gezielte Einströmung der Kühlluft in den Kühlluftkanal.

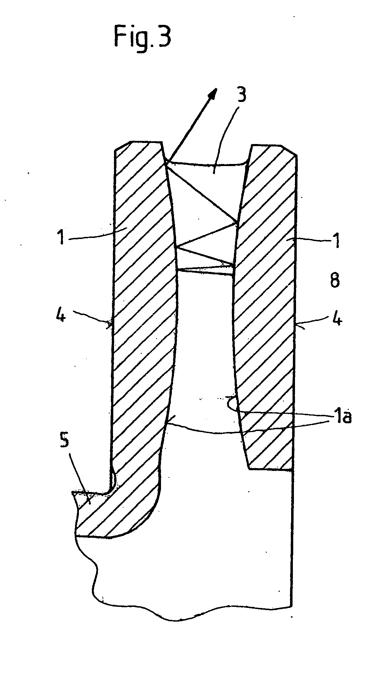

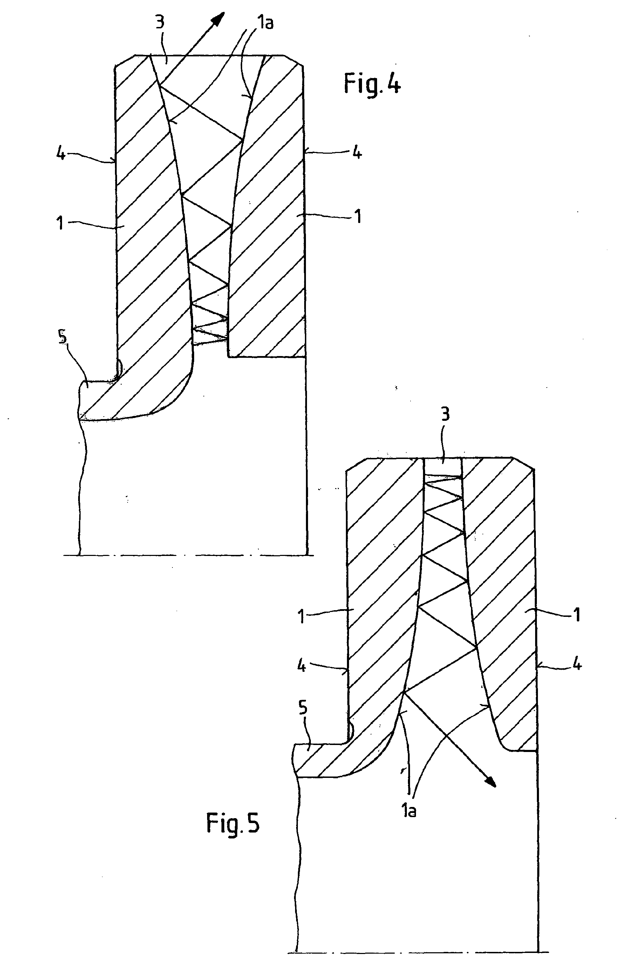

Aus der vergrößerten Darstellung des Kühlluftkanals 3 in Fig. 3 geht hervor, daß die einander gegenüberliegenden Innenflächen 1 a der Reibscheiben 1 einen Kühlluftkanal 3 mit einem sich erweiternden Querschnitt bilden. Während bei der Ausführungsform nach Fig. 4 eine Erweiterung des Kühlluftkanales 3 radial nach außen erfolgt und beim Ausführungsbeispiel nach Fig. 5 die Erweiterung in radialer Richtung nach innen verläuft, erfolgt beim Ausführungsbeispiel nach Fig. 3 die Erweiterung ausgehend von etwa der Mitte des Kühlluftkanales 3 nach innen und außen.

Diese Erweiterung hat zum Ziel, daß die Wärmestrahlung, die von der Innenfläche 1 a der Reibscheiben ausgeht, nach mehrfacher Reflexion ins Freie geführt wird. Bei allen drei Ausführungsbeispielen ist ein Beispiel für eine von der engsten Stelle des Kühlluftkanales 3 ausgehende Strahlung anhand eines Strahlungsverlaufes eingezeichnet. Dieser Strahlungsverlauf läßt erkennen, daß die Wärmestrahlung letztendlich außerhalb des Kühlluftkanales 3 mündet und daß auf diese Weise ein Teil der in den Reibscheiben 1 entstehenden Wärmeenergie durch Strahlung abgeführt wird.

Die Ableitung der Wärmeenergie aus der engsten Stelle des Kühlluftkanales 3, das heißt aus dem Bereich der größten axialen Dicke der Bremsscheibe mittels Strahlung führt in Verbindung mit der besseren Konvektion durch turbulente Strömung zu einer erheblichen Verbesserung der Wärmeabfuhr aus der Bremsscheibe.

### Bezugszeichenliste

- 1: Reibscheibe
- 1 a: Innenfläche
- 2: Verbindungselement
- 2 a: Noppen
- 2 b: Noppen
- 2 c: Noppen
- 2 d: Noppen
- 2 e: Anströmfläche
- 2 f: Noppen
- 2 g: Leitfläche
- 3: Kühlluftkanal
- 4: Außenseite
- 5: Übergang
- 6: Befestigungsflansch
- 7: Bohrung
- 8: Strahlungskanal

## Patentansprüche

1. Bremsscheibe für eine Scheibenbremse eines Kraftfahrzeuges, insbesondere eines Nutzfahrzeuges, mit zwei einander in axialem Abstand gegenüberliegenden Reibscheiben (1), die unter Bildung eines insgesamt ringförmigen Kühlluftkanals (3) durch Verbindungselemente (2) miteinander verbunden sind,
**dadurch gekennzeichnet,**
**daß** die Verbindungselemente (2) als im Abstand voneinander angeordnete Noppen (2 a, 2 b, 2 c, 2 d, 2 e, 2 f) ausgebildet sind, welche eine turbulente Durchströmung des Kühlluftkanals (3) erzeugen, daß die Noppen (2 a - 2 f) auf konzentrischen Kreisen angeordnet sind, wobei die Noppen (2 a - 2 f) auf jeweils zwei einander benachbarten konzentrischen Kreisen radial versetzt zueinander angeordnet sind, und daß der Kühlluftkanal (3) einen sich in zentrifugaler und/oder in zentripetaler Richtung erweiternden Querschnitt aufweist.

2. Bremsscheibe nach Anspruch 1, **dadurch gekennzeichnet, daß** die Noppen (2 a - 2 f) auf zwei einander benachbarten konzentrischen Kreisen auf Lücke zueinander angeordnet sind.

3. Bremsscheibe nach Anspruch 1 oder 2, **dadurch gekennzeichnet, daß** die Noppen (2 a-2 f) auf den konzentrischen Kreisen mit unterschiedlicher Form und/oder Größe ausgebildet sind.

4. Bremsscheibe nach Anspruch 3, **dadurch gekennzeichnet, daß** zumindest ein Teil der Noppen (2 a - 2 d) jeweils mit einer etwa tangential liegenden, nahezu ebenen Anströmfläche (2 e) ausgebildet ist.

5. Bremsscheibe nach einem der Ansprüche 1 bis 4, **dadurch gekennzeichnet, daß** die Noppen (2 f) des inneren Kreises in radialer Richtung länglich, mit radialen Leitflächen (2 g) ausgebildet sind.
